# EUROPÄISCHE PATENTSCHRIFT

(11) **EP 0 248 177 B1**
(45) Veröffentlichungstag und Bekanntmachung des Hinweises auf die Patenterteilung: **16.06.1993**
(21) Anmeldenummer: 87105597.6
(22) Anmeldetag: 15.04.1987
(51) Int. Cl.: H04M 19/00

(54) **Fernspeiseeinrichtung**
Remote supply device
Dispositif d'alimentation à distance

(30) Priorität: 23.05.1986 DE 3617375
(43) Veröffentlichungstag der Anmeldung: 09.12.1987
(73) Patentinhaber: ANT Nachrichtentechnik GmbH, D-71522 Backnang (DE)
(72) Erfinder: Mittrich, Edgar, D-7150 Backnang (DE)

(56) Entgegenhaltungen:
- EP-A- 0 057 840
- DE-A- 2 740 540
- DE-A- 3 246 144
- FR-A- 2 441 303

## Beschreibung

Die Erfindung bezieht sich auf eine Speiseeinrichtung gemäß Oberbegriff des Anspruches 1.
Solche Speiseeinrichtungen sind bekannt, beispielsweise durch die US-A-3,649,769. Nachteilig ist bei allen bekannten Schaltungen der enge Strombereich. So ist die Schaltung nach dem zitierten US-Patent lediglich für einen Strombereich von 25 bis 100mA geeignet Sie ist auch nur dann geeignet, wenn der Spannungsabfall an der elektronischen Drossel unwichtig ist. So fallen an der elektronischen Drossel bei 100mA mehr als 36V ab (R1 und R1' = jeweils 180 Ohm). Bei Strömen von < 25mA gehen die beiden Längstransistoren Q1 und Q1' in die Sättigung und kappen somit die Wechselspannung.

Der Erfindung lag die folgende Aufgabe zu Grunde, eine Speiseeinrichtung der eingangs genannten Art anzugeben, welche einen breiten Strombereich sowie einen geringen Spannungsverlust auch bei großen Strömen aufweist.

Diese erfindungsgemäße Aufgabe wurde gelöst durch die kennzeichnenden Merkmale des Anspruches 1.
Die Speiseeinrichtung gemäß der Erfindung weist den Vorteil auf, daß ein Betrieb mit breitem Strombereich möglich ist. In einem Ausführungsbeispiel beträgt der Strombereich 0 bis 300mA. Der Spannungsverlust ist auch bei hohen Lastströmen sehr gering, bei dem genannten Ausführungsbeispiel beträgt der Spannungsverlust bei einem Laststrom von 300mA lediglich 4V bei 48V Speisespannung.
Ein weiterer Vorteil liegt in der Aufwandsgünstigkeit der Speiseeinrichtung. Ferner weist die Speiseeinrichtung neben der gleichstrommäßigen Niederohmigkeit und der wechselstrommäßigen Hochohmigkeit Kurzschlußfestigkeit auf.

Optimale Ausgestaltungen der Erfindung ergeben sich durch die Unteransprüche.

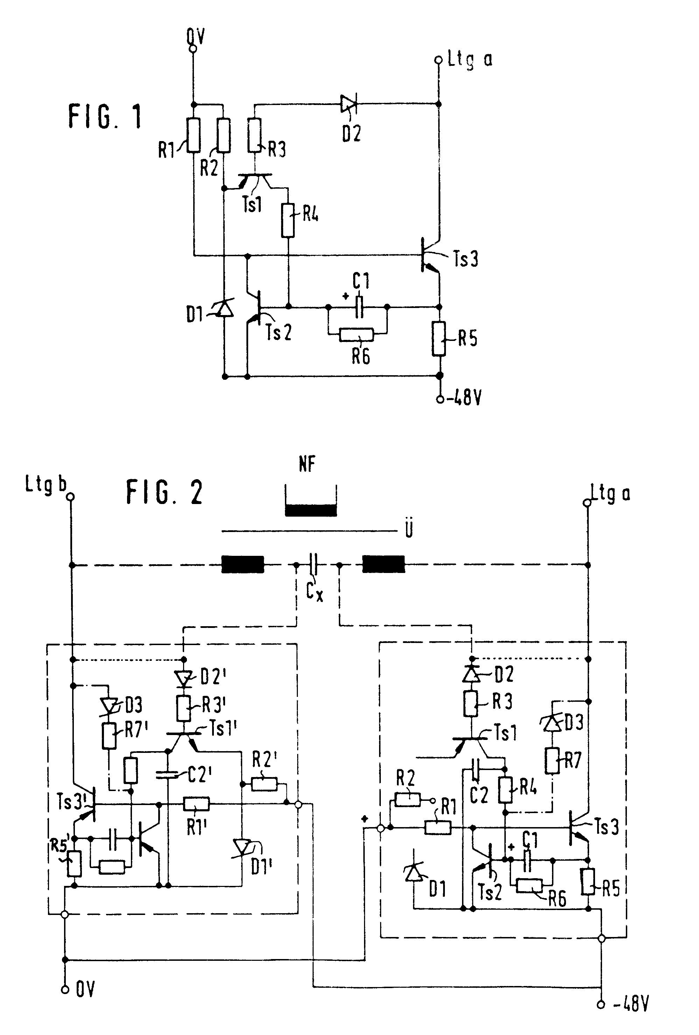

Es folgt die Beschreibung der Erfindung anhand der Figuren. Figur 1 zeigt die elektronische Drossel der Speiseeinrichtung zwischen einem Pol der Spannungsquelle und einer Ader der Zweidrahtleitung.
In Figur 2 ist eine symmetrische Speiseeinrichtung mit zwei elektronischen Drosseln zwischen den beiden Adern und den beiden Polen der Spannungsquelle gezeichnet.

In Figur 1 ist ein Längstransistor Ts3 zwischen der a-Ader der Zweidrahtleitung und dem einen Pol -48V der Spannungsversorgung in Reihe mit einem Emitterwiderstand R5 erkennbar. Seine Basis wird über einen Widerstand R1 vom zweiten Pol der Spannungsquelle 0V gespeist. Dieser Längstransistor mit seinem Emitterwiderstand bildet die eigentliche elektronische Drosselstrecke. Erkennbar ist ferner ein Steuertransistor Ts2, der mit seiner Kollektor-Emitter-Strecke an die Basis des Längstransistors Ts3 bzw. an einen Pol -48V der Spannungsquelle geschaltet ist und dessen Basis über einen Widerstand R4 und über die Emitter-Kollektor-Strecke eines Quertransistors Ts1 von einem Punkt konstanter Spannung (2,7V) gespeist wird. Diese Konstantspannungsquelle besteht aus einem Widerstand R2 der an 0V der Spannungsquelle geschaltet ist und einer Zenerdiode D1, die an -48V der Spannungsquelle liegt. Die Basis des Quertransistors Ts1 wird über einen Widerstand R3 und eine Diode D2 vom Potential an der Ader a der Leitung gespeist. Die Basis des Steuertransistors Ts2 ist über eine Parallelschaltung eines Siebkondensators C1 mit einem sechsten Widerstand R6 mit dem Emitter des Längstransistors Ts3 verbunden.
Der Quertransistor Ts1 wird angesteuert, sobald das Potential der a-Ader unter 1,8V zu sinken droht. Es setzt dann einen Strom ein von 0V, über Widerstand R2, Emitter-Basis-Strecke des Quertransistors Ts1, Widerstand R3, Diode D2, Kollektor-Emitter-Strecke des Längstransistors Ts3 und Emitter-Widerstand R5 nach -48V der Spannungsquelle. Über die mehr oder weniger leitend gesteuerte Emitter-Kollektor-Strecke des Längstransistors Ts1 setzt ein Strom ein, der über den vierten Widerstand R4 den Steuertransistor Ts2 soweit leitend steuert, daß für den Längstransistor Ts3 nur noch soviel Basisstrom übrig bleibt, daß sich an der Reihenschaltung seiner Emitter-Kollektor-Strecke mit dem Emitter-Widerstand R5 ein Spannungsabfall in der geforderten Höhe von 1,8V ergibt.
Dieser Gleichspannungsabfall wird, unabhängig vom Laststrom, konstant gehalten.
Damit ist die Aufgabe nach gleichstrommäßiger Niederohmigkeit und breitem Strombereich erfüllt. Die an der a-Ader auftretende der Gleichspannung überlagerte Wechselspannung, beispielsweise Sprechpegel oder Datentöne, soll natürlich von der geschilderten Regelung nicht erfaßt werden; sie soll im Gegenteil durch die elektronische Drossel nicht beeinflußt werden. Hierfür muß die Regelstrecke im interessierenden Frequenzbereich unwirksam sein. Das bewirkt der Siebkondensator C1 bzw. C1' sowie ein zweiter Siebkondensator C2 bzw. C2' zwischen Kollektor des Quertransistors Ts1 und -48V gemäß Figur 2. Dadurch, daß der erste Siebkondensator C1 am Emitter des ersten Längstransistors Ts3 statt an -48V geschaltet ist, wird zusätzlich eine sich günstig auswirkende Stromgegenkopplung bewirkt.

Die Schaltung weist auch die gewünschte Kurzschlußfestigkeit auf, wenn der Emitter-Widerstand R5 des Längstransistors Ts3 richtig dimensioniert ist. Dann erreicht der Spannungsabfall an R5 beispielsweise bei einem Laststrom von 330mA die Schwellenspannung der Basis-Emitter-Strecke des Steuertransistors Ts2. Dieser wird dann noch niederohmiger und verringert den Basisstrom des ersten Längstransistors Ts3, wodurch der Laststrom auf 330mA begrenzt wird.
Soll die Verlustleistung des Längstransistors Ts3 im Überlastfall klein gehalten werden, so wird vorteilhafterweise eine rückläufige Strombegrenzung eingesetzt. Dies wird erreicht nach Anspruch 3 durch Verbinden der Basis des Steuertransistors Ts2 über eine Reihenschaltung eines siebten Widerstandes R7 und einer weiteren Zenerdiode D3 mit der a-Ader der Leitung (Fig. 2). Dieser strichpunktiert gezeichnete Strompfad bewirkt in bekannter Weise, daß nach Erreichen der Laststromgrenze von 330mA und Überschreiten der Zenerspannung der Zenerdiode D3 der Laststrom stark verringert bzw. bei entsprechender Dimensionierung von R7 völlig zurückgeht.
Die Diode D2 verhindert, daß im Überlastfall an die Basis des Quertransistors Ts1 eine unzulässig hohe Sperrspannung gelangt.

Damit ist auch zum großen Teil die Figur 2 beschrieben.
Die Figur 2 zeigt den symmetrischen Aufbau der erfindungsgemäßen Speiseeinrichtung mit zwei gestrichelt umrandeten elektronischen Drosseln jeweils zwischen einer Ader und einem Pol der Spannungsquelle. Beide Drosseln weisen gleiche Anordnungen auf, die einander entsprechenden Transistoren sind jedoch jeweils vom Komplementärtyp, also der Längstransistor Ts3 zwischen a-Ader und -48V im rechten Teil ist vom npn-Typ, während der entsprechende Längstransistor Ts3' im linken Teil zwischen b-Ader und 0V vom Typ pnp ist. Außerdem sind die einander entsprechenden Dioden jeweils umgekehrt gepolt (vgl. D1 und D1', D2 und D2', D3 und D3').
In der Figur 2 ist außerdem ein Übertrager Ü zur Aus- bzw. Einkopplung der Niederfrequenz NF von bzw. in die Zweidrahtleitung gezeichnet. Dieser Übertrager Ü enthält zwei symmetrische Primärwicklungen, die zwischen die beiden Adern in Reihe geschaltet sind und durch einen Koppelkondensator Cx miteinander verbunden sind. In diesem Fall bietet sich an, die Diode D2 nicht direkt an der a-Ader anzuschließen (punktiert gezeichnet) sondern am Koppelkondensator Cx (strichliert gezeichnet), was eine weitere Siebung der Regelstrecke bewirkt.

Mit geringem Aufwand ist somit eine Schaltung realisiert, die keinerlei Abgleich erfordert und in einem weiten Laststrombereich sicher arbeitet.
Die Stromgrenze von 300mA ist lediglich als Beispiel anzusehen. Selbstverständlich kann mit entsprechender Dimensionierung und bei entsprechender Transistorauswahl diese Grenze auch bei wesentlich höheren Strömen liegen.
Die Wiedereinschaltung nach einer Überlastung ist nicht dargestellt. Sie kann beispielsweise durch kurzzeitiges Abschalten der Speisespannung bewirkt werden oder durch völlige Entlastung der beiden Adern z.B. durch Unterbrechung der Zweidrahtleitung.
Beim Anlegen der Speisespannung verhindern die leeren Siebkondensatoren ein Ansprechen der rückläufigen Strombegrenzung über die Dioden D3 bzw, D3' und über die Widerstände R7 bzw. R7'. Die Längstransistoren Ts3, Ts3' werden sofort leitend gesteuert, bevor die durch die aufgeladenen Siebkondensatoren C1, C1' über die Steuertransistoren Ts2, Ts2' gesperrt gehalten werden könnten.

## Patentansprüche

1. Schaltungsanordnung zur Gleichstromspeisung von Teilnehmereinrichtungen, Leitungsverstärkern u.ä. über eine Zweidrahtleitung (Ltg a; Ltg b) mit mindestens einem als elektronische Drossel wirkenden Regelverstärker zwischen den Polen (0V; -48V) der versorgenden Spannungsquelle und den beiden Adern (a, b), wobei der Regelverstärker einen Längstransistor (Ts3; Ts3') und einen Widerstand (R5, R5') zwischen dessen Emitter und dem einen Pol der Spannungsquelle aufweist, dadurch gekennzeichnet, daß die Basis des Längstransistors (Ts3) über einen Widerstand (R1) mit dem anderen Pol (0V) der Spannungsquelle verbunden ist,
daß zwischen der Basis des Längstransistors (Ts3) und dem einen Pol (-48V) der Spannungsquelle ein Steuertransistor (Ts2) angeordnet ist, dessen Basis über einen weiteren Widerstand (R4), die Kollektor-Emitter-Strecke eines Quertransistors (Ts1) und einem zweiten Widerstand (R2) mit dem anderen Pol (0V) der Spannungsquelle verbunden ist,
wobei sein Emitter über eine Zenerdiode (D1) mit dem einen Pol (-48V) der Spannungsquelle Verbunden ist,
daß die Basis des Quertransistors (Ts1) über einen dritten Widerstand (R3) und eine Diode (D2) mit der einen Ader (a) der Leitung verbunden ist, und
daß die Basis des Steuertransistors (Ts2) über eine Parallelschaltung aus einem Siebkondensator (C1) und einem sechsten Widerstand (R6) mit dem Emitter des Längstransistors (Ts3) verbunden ist (Fig. 1).

2. Schaltungsanordnung nach Anspruch 1, dadurch gekennzeichnet, daß ein weiterer Siebkondensator (C2) zwischen dem Kollektor des Quertransistors (Ts1) und dem einen Pol (-48V) der Spannungsquelle geschaltet ist (Fig. 2).

3. Schaltungsanordnung nach einem der vorhergehenden Ansprüche, dadurch gekennzeichnet, daß die Basis des Steuertransistors (Ts2) über eine Reihenschaltung aus einem siebten Widerstand (R7) und einer weiteren Zenerdiode (D3) mit der einen Ader (a) der Leitung verbunden ist (Fig. 2).

4. Schaltungsanordnung nach einem der vorhergehenden Ansprüche mit je einem Regelverstärker zwischen den beiden Polen der Spannungsquelle und den beiden Adern der Zweidrahtleitung, dadurch gekennzeichnet, daß die beiden Regelverstärker die gleiche Schaltungsanordnung aufweisen, wobei jeweils die einander entsprechenden Transistoren als Komplementärtypen (npn/pnp) ausgeführt und die einander entsprechenden Dioden umgekehrt gepolt sind (Fig. 2).

5. Schaltungsanordnung nach Anspruch 4 mit Übertrager Ü zur Aus- bzw. Einkopplung der zu übertragenden Wechselstromsignale, mit zwei symmetrischen, mit einem Koppelkondensator (Cx) miteinander verbundenen Primärwicklungen, die an die beiden Adern geschaltet sind, dadurch gekennzeichnet, daß die Basis des Quertransistors (Ts1) über den dritten Widerstand (R3) und die eine Diode (D2) mit dem Koppelkondensator (Cx) verbunden ist (Fig. 2).

## Claims

1. Circuit arrangement for the direct current supply of subscriber equipments, line amplifiers and similar by way of a two-wire line (Ltg a; Ltg b) with at least one regulating amplifier, which acts as electronic choke, between the poles (0V;-48V) of the supplying voltage source and both the wires (a, b), wherein the regulating amplifier comprises a series transistor (Ts3; Ts3') and a resistor (R5, R5') between its emitter and the one pole of the voltage source, characterised thereby, that the base of the series transistor (Ts3) is connected by way of a resistor (R1) with the other pole (0V) of the voltage source, that a control transistor (Ts2), the base of which is connected by way of a further resistor (R4) with the other pole (0V) of the voltage source, is arranged between the base of the series transistor (Ts3) and the one pole (-48V) of the voltage source and that the collector-emitter path of a parallel transistor (Ts1) is connected by way of a second resistor (R2) with the other pole (0V) of the voltage source, wherein its emitter is connected by way of a Zener diode (D1) with the one pole (-48V) of the voltage source, that the base of the parallel transistor (Ts1) is connected by way of a third resistor (R3) and a diode (D2) with the one wire (a) of the line and that the base of the control transistor (Ts2) is connected by way of a parallel connection of a filter capacitor (C1) and a sixth resistor (R6) with the emitter of the series transistor (Ts3) (Figure 1).

2. Circuit arrangement according to claim 1, characterised thereby, that a further filter capacitor (C2) is connected between the collector of the parallel transistor (Ts1) and the one pole (-48V) of the voltage source (Figure 2).

3. Circuit arrangement according to one of the preceding claims, characterised thereby, that the base of the control transistor (Ts2) is connected by way of a series connection of a seventh resistor (R7) and a further Zener diode (D3) with the one wire (a) of the line (Figure 2).

4. Circuit arrangement according to one of the preceding claims and with a respective regulating amplifier between both the poles of the voltage source and both the wires of the two-wire line, characterised thereby, that both the regulating amplifiers comprise the same circuit arrangement, wherein the mutually corresponding transistors are each executed as complementary types (npn, pnp) and the mutually corresponding diodes are of opposite polarity (Figure 2).

5. Circuit arrangement according to claim 4 and with transformers (U), for the inward and outward coupling of the alternating current signals to be transmitted, with two symmetrical primary windings which are connected together by a coupling capacitor (Cₓ) and connected to both the wires, characterised thereby, that the base of the parallel transistor (Ts1) is connected by way of the third resistor (R3) and the one diode (D2) with the coupling capacitor (Cₓ) (Figure 2).

## Revendications

1. Dispositif d'alimentation en courant continu de dispositifs de correspondants ou d'abonnés, d'amplificateurs de ligne et analogues, par l'intermédiaire d'une ligne bifilaire (Ltg a; Ltg b), comportant au moins un amplificateur de réglage, opérant en tant que restricteur électronique, entre les pôles (0 V; 48 V) de la source de tension d'alimentation et les deux fils ou brins (a, b), l'amplificateur de réglage présentant un transistor de passage longitudinal (Ts3, Ts3') et une résistance (R5, R5') entre son émetteur et le premier pôle de la source de tension, caractérisé par le fait que la base du transistor de passage longitudinal (Ts3) est reliée, par l'intermédiaire d'une résistance (R1), à l'autre pôle (0 V) de la source de tension,
par le fait qu'entre la base du transistor de passage longitudinal (Ts3) et le premier pôle (-48 V) de la source de tension est disposé un transistor de commande (Ts2) dont la base est reliée à l'autre pôle (0 V) de la source de tension par l'intermédiaire d'une autre résistance (R4), du trajet collecteur-émetteur d'un transistor de passage transversal (Ts1) et d'une deuxième résistance (R2), son emetteur étant relié, par l'intermédiaire d'une diode zener (D1), au premier pôle (-48 V) de la source de tension,
par le fait que la base du transistor de passage transversal (Ts1) est reliée à l'autre brin (a) de la ligne par l'intermédiaire d'une troisième résistance (R3) et d'une diode (D2), et
par le fait que la base du transistor de commande (Ts2) est reliée à l'émetteur du transistor de passage longitudinal (Ts3) par l'intermédiaire d'un groupement parallèle constitué par un condensateur de filtrage (C1) et par une sixième résistance (R6) (figure 1).

2. Dispositif selon revendication 1, caractérisé par le fait qu'un autre condensateur de filtrage (C2) est connecté entre le collecteur du transistor de passage transversal (Ts1) et le premier pôle (-48 V) de la source de tension (figure 2).

3. Dispositif selon l'une des revendications précédentes, caractérisé par le fait que la base du transistor de commande (Ts2) est reliée au premier brin (a) de la ligne par l'intermédiaire d'un groupement série constitué par une septième résistance (R7) et par une autre diode zener (D3) (figure 2).

4. Dispositif selon l'une des revendications précédentes, comportant un amplificateur de réglage entre chacun des deux pôles de la source de tension et chacun des deux brins de la ligne bifilaire, caractérisé par le fait que les deux amplificateurs de réglage présentent le même agencement de circuit, les transistors se correspondant étant réalisés en tant que types complémentaires (npn/pnp), et les diodes se correspondant étant connectées avec des polarités inverses (figure 2).

5. Dispositif selon revendication 4, avec transmetteur (ü) pour le prélèvement et le couplage des signaux à courant alternatif à transmettre, ce transmetteur comportant deux enroulements primaires symétriques mutuellement reliés par un condensateur de couplage (Cx), lesquels sont raccordés aux deux brins, caractérisé par le fait que la base du transistor de passage transversal (Ts1) est reliée au condensateur de couplage (Cx) par l'intermédiaire de la troisième résistance (R3) et de la première diode (D2) (figure 2).
